# EUROPÄISCHE PATENTSCHRIFT

(11) **EP 3 424 690 B1**
(45) Veröffentlichungstag und Bekanntmachung des Hinweises auf die Patenterteilung: **13.09.2023**
(21) Anmeldenummer: 17179409.2
(22) Anmeldetag: 03.07.2017
(51) Int. Cl.: B29D 28/00, B29B 15/12, B29B 15/14, B29C 70/22, E04C 5/07

(54) **VERFAHREN UND VORRICHTUNG ZUR HERSTELLUNG EINES BEWEHRUNGSGITTERS**
METHOD AND DEVICE FOR PRODUCING A REINFORCEMENT GRID
PROCÉDÉ ET DISPOSITIF DE FABRICATION D'UNE GRILLE D'ARMATURE

(43) Veröffentlichungstag der Anmeldung: 09.01.2019
(73) Patentinhaber: Solidian GmbH, 72458 Albstadt (DE)
(72) Erfinder: BRUSKE, Johannes, 72458 Albstadt (DE); LOHRMANN, Stefan, 72348 Rosenfeld (DE)
(74) Vertreter: Rüger Abel Patentanwälte PartGmbB

(56) Entgegenhaltungen:
- WO-A1-2014/183146
- WO-A1-2017/153202
- AT-B- 265 826
- JP-A- 2003 103 642
- RU-U1- 158 113
- US-A1- 2016 102 457

## Beschreibung

Die Erfindung betrifft ein Verfahren sowie eine Vorrichtung zur Herstellung eines Bewehrungsgitters. Das Bewehrungsgitter kann beispielsweise dazu verwendet werden, in einen Betonkörper bzw. eine Zementmatrix eingebunden zu werden.

Im Bausektor werden heute überwiegend stahlbewehrte Bauteile verwendet. Es ist seit langem bekannt, Bewehrungsgitter bzw. Stahlgittermatten durch Aneinanderschweißen von Stahlstäben herzustellen.

Aus dem Fahrzeugbau ist es ferner bekannt, Bauteile wie Rumpfteile von Booten oder Flugzeugen oder Karosserieteile aus faserverstärkten Verbundmaterialien herzustellen. Hierfür werden sogenannte Rovings oder aus Rovings gebildete Gewebematten in eine Kunststoffmatrix eingebunden.

Um solche Bewehrungen oder Gitter herzustellen, sind verschiedene Verfahren vorgeschlagen worden. DE 199 13 479 C1 beschreibt die Herstellung eines Geogitters mit sich kreuzenden thermoplastischen Kunststoffstäben, die miteinander verschweißt werden.

Bei dem Bewehrungsgitter oder Bewehrungsbauteil, das aus DE 10 2005 043 386 A1 bekannt ist, werden die Stäbe an den Kreuzungsstellen mit Verbindungsfasern, insbesondere Glasfasern, mechanisch miteinander verbunden und zwar vor dem Tränken mit Harz.

RU 201300087 A1 beschreibt das Herstellen eines Bewehrungsgitters, wobei bei den Längsstäben eine Spiralwicklung vorhanden ist, in die Querstäbe an den Kreuzungsstellen eingebunden sind.

Aus EP 0 387 968 A1 ist ein Verfahren zur Herstellung eines Gewebes mit Dreherbindung bekannt. Dieses Gewebe kann anschließend zu den faserverstärkten Verbundwerkstoffen in eine entsprechende Kunststoffmatrix eingebunden werden.

JP 2003-103642 A offenbart ein Verfahren zur Herstellung eines Gitterkörpers, bei dem die Längselemente mit einem Harz getränkt werden und anschließend mit einem Harz getränkte Querelemente darauf angeordnet werden. Die so entstandene Gitterstruktur wird an den Kreuzungsstellen dadurch verbunden, dass das Harz, mit dem die Längs- und Querelemente getränkt wurden, ausgehärtet wird. Ähnliche Verfahren sind beispielsweise auch aus JP 2013-223995 A, RU 2009 121 291 A und US 2016/0102457 A1 bekannt.

Bei dem aus RU 2394135 C1 bekannten Verfahren werden Rovings einem Bad zugeführt und mit Harz getränkt. Anschließend wird überschüssiges Harz von den getränkten Rovings ausgedrückt. Auf die getränkten Stränge werden Querelemente aufgelegt. Durch Zuführen von Druck und Wärme werden die Längselemente mit den Querelementen verbunden. Ein ähnliches Verfahren beschreibt auch RU 2404892 C1.

Ein weiteres Herstellungsverfahren für ein Bewehrungsgitter sieht vor, Längselemente parallel zueinander in einer Form zu fördern und quer dazu ein Querelement durch die Form anzuordnen. Die Form umschließt die Kreuzungsstellen zwischen den Längselementen und dem Querelement und es wird Verbindungsmaterial in die Form zugeführt. Dadurch werden das Querelement und die Längselemente an den Kreuzungsstellen miteinander verbunden (RU 2548358 C2).

Bei dem aus US 6,632,309 B1 bekannten Verfahren wird ein Gewebe mit Harz imprägniert, in eine Form eingelegt und ausgehärtet, um ein Bewehrungsgitter herzustellen. Dadurch lässt sich das Gewebe in unterschiedlichen dreidimensionalen Gestalten aushärten und bildet einen dreidimensionalen Körper.

RU 158 113 U1 beschreibt ein Verfahren zur Herstellung eines Bewehrungsgitters. Von einem ersten Spulengatter werden Bewehrungsstränge in einer ersten Richtung abgezogen und von einem zweiten Spulengatter werden Bewehrungsstränge in einer Richtung rechtwinklig zu den Bewehrungssträngen des ersten Spulengatters abgezogen und in Gitterform angeordnet. In einem Spritzgusswerkzeug wird das Gitter an den Kreuzungsstellen umspritzt, um die einzelnen Bewehrungsstränge miteinander zu verbinden. Anschließend werden die Bewehrungsstränge mit einer Schneidabrichtung abgetrennt.

AU 265826 schlägt vor, Kunststoffstäbe über ein Bindemittel an Kreuzungsstellen zu verbinden, wobei das Bindemittel über Spritzköpfe mit einer Düse an den Kreuzungsstellen der Stäben aufgespritzt wird. Die Kreuzungsstelle kann von einer Form umschlossen werden.

WO 2014/183146 A1 beschreibt ein Verfahren zur Herstellung eines Bewehrungsstabes. Ein solches Verfahren ist auch in WO 2017/153202 A1 offenbart, wobei der Bewehrungsstab hier eine Kunststoffmatrix aufweist, die reversibel quervernetzbar ist. Durch das Aufweichen der Kunststoffmatrix und das erneute Härten können Bewehrungsstäbe beispielsweise zu Gittern verbunden werden.

Ausgehend vom Stand der Technik ist es eine Aufgabe der vorliegenden Erfindung, ein Bewehrungsgitter derart herzustellen, dass die Menge an Abfallmaterial minimiert ist. Insbesondere soll auch die Weiterverarbeitung des hergestellten Bewehrungsgitters verbessert werden.

Diese Aufgabe wird durch ein Verfahren mit den Merkmalen des Patentanspruches 1 sowie eine Vorrichtung mit den Merkmalen des Patentanspruches 10 gelöst.

Bei dem erfindungsgemäßen Verfahren zur Herstellung eines Bewehrungsgitters wird zunächst ein Verstärkungsfaserstrang mittels einer Fördereinrichtung zu einer Tränkstation zugeführt. Der Verstärkungsfaserstrang kann auch als "Roving" bezeichnet werden. Der Verstärkungsfaserstrang ist aus einem oder mehreren Filamenten gebildet und kann als Verstärkungsgarn ausgeführt sein. Als Filamente können Kunstfasern und/oder Naturfasern verwendet werden, wie etwa Glasfasern unterschiedlicher Typen (z.B. AR-Glasfasern), Karbonfasern oder Basaltfasern.

In der Tränkstation wird der Verstärkungsfaserstrang mit einem Harz getränkt, insbesondere einem duromeren Harz, wie Epoxidharz, Vinylesterharz oder Polyesterharz. Der Verstärkungsfaserstrang wird insbesondere kontinuierlich durch die Tränkstation gefördert, beispielsweise durch ein Bad. Alternativ könnte das Harz in der Tränkstation auch über eine Sprüh- oder eine andere Auftrageinrichtung auf den Verstärkungsfaserstrang aufgetragen werden.

Am Ende der Tränkstation wird überschüssiges Harz in einer Abstreifeinrichtung entfernt und kann beispielsweise in den Vorrat des Harzes der Tränkstation zurückgeführt werden. Die im Verstärkungsfaserstrang verbleibende Harzmenge ist ausreichend zur Bildung einer Kunststoffmatrix zur Bindung des Verstärkungsfaserstrangs. Der getränkte Verstärkungsfaserstrang kann, vorzugsweise mittels der Fördereinrichtung, von der Abstreifeinrichtung in eine Aushärtstation gefördert werden, wo das Harz zur Bildung eines ausgehärteten faserverstärkten Strangmaterials ausgehärtet wird. Dieses ausgehärtete Strangmaterial wird, vorzugsweise mittels der Fördereinrichtung, weiter zu einer Trennstation gefördert und dort zur Bildung von Stäben in entsprechenden Längen abgetrennt. Insbesondere diese ausgehärteten Stäbe können problemlos zwischengelagert werden und müssen nicht sofort weiterverarbeitet werden. Es ist bevorzugt, wenn die Trennstation derart angesteuert wird, dass abhängig von der gewünschten Form des Bewehrungsgitters jeder Stab eine definierte Länge aufweist. Die Längen der Stäbe können sich dabei voneinander unterscheiden.

Einige der Stäbe werden nebeneinander als Längsstäbe abgelegt. Dies kann beispielsweise mittels einer Manipulatoreinrichtung geschehen. Mehrere weitere Stäbe werden als Querstäbe auf die Längsstäbe gelegt, wozu die Manipulatoreinrichtung verwendet werden kann. Als Manipulatoreinrichtung können eine oder mehrere Greifer, Roboter, Portaleinrichtungen oder dergleichen verwendet werden.

Zur Verbindung der Längsstäbe mit den Querstäben wird bei einer Alternative des Verfahrens aushärtbares Verbindungsmaterial verwendet. Es wird ausschließlich im Bereich von Kreuzungsstellen aufgebracht, an denen sich jeweils ein Längsstab und jeweils ein Querstab kreuzen und aneinander gelegt werden oder bereits in Kontakt stehen. Das aushärtbare Verbindungsmaterial wird aufgebracht, nachdem die Querstäbe auf den Längsstäben abgelegt wurden. Dabei werden die Stäbe nicht über ihre gesamte Länge mit dem Verbindungsmaterial versehen, sondern lediglich an bzw. im Bereich der Kreuzungsstellen. Zwischen zwei benachbarten Kreuzungsstellen weist jeder Stab einen Abschnitt auf, der frei ist von aushärtbarem Verbindungsmaterial. In den Bereichen, in denen die Stäbe frei sind von Verbindungsmaterial, bleibt die Eigenschaft des Stabes unverändert aufrechterhalten, beispielsweise dessen Biegbarkeit bzw. Verformbarkeit. Beeinträchtigungen der Verformungseigenschaft durch zusätzliches Aufbringen und Aushärten des Verbindungsmaterials werden in den Abschnitten zwischen den Kreuzungsstellen vermieden. Dadurch lässt sich das hergestellte Bewehrungsgitter einfach weiterverarbeiten bzw. es können aus den Stäben beliebige dreidimensionale Bewehrungskörper gebildet werden, bei denen sich die Stäbe nicht nur parallel zu einer Ebene (wie bei einem zweidimensionalen Gitter), sondern auch rechtwinkelig oder schräg zu dieser Ebene erstrecken können. Beispielsweise können zusätzliche Stäbe zwischen den bereits vorhandenen Kreuzungsstellen mit dem Bewehrungsgitter verbunden werden, etwa wiederum durch Aufbringen eines aushärtbaren Verbindungsmaterials und anschließendes Aushärten. Auf diese Weise können beispielsweise auch zwei hergestellte Bewehrungsgitter miteinander verbunden werden, um etwa ein T-förmiges bzw. ein abgewinkeltes Bewehrungsgitterelement bzw. einen dreidimensionalen Bewehrungskörper zu bilden.

Außerdem kann die benötigte Menge an Verbindungsmaterial so klein wie möglich gehalten werden.

Nach dem Aufbringen des Verbindungsmaterials an den Kreuzungsstellen wird dieses mittels einer Aushärteinrichtung ausgehärtet, so dass die Querstäbe mit den Längsstäben an den Kreuzungsstellen fest verbunden sind.

Alternativ zur Erfindung kann die Verbindung zwischen den Längs- und Querstäben ohne zusätzliches Verbindungsmaterial erfolgen, wenn an jeder Kreuzungsstelle wenigstens einer der Stäbe noch nicht ausgehärtet ist, d.h. aus einem nicht ausgehärteten faserverstärkten Strangmaterial besteht. In diesem Fall werden die aneinander anliegenden Stäbe gemeinsam mittels der Aushärteinrichtung ausgehärtet, so dass die Querstäbe mit den Längsstäben an den Kreuzungsstellen fest verbunden sind.

Die Aushärteinrichtung kann analog zu der Aushärtstation ausgebildet sein, beispielsweise durch ein Ofen oder eine andere Heizeinrichtung. Die Erwärmung in einem Ofen kann auch induktiv erfolgen, wenn die Stäbe elektrisch leitfähiges Material enthalten, beispielsweise wenn Kohlenstofffasern verwendet werden. Abhängig von der Art, wie das Harz bzw. das Verbindungsmaterial aushärtet, können in der Aushärtstation oder als Aushärteinrichtung auch andere Einrichtungen verwendet werden, wie etwa eine Einrichtung zur Abstrahlung von elektromagnetischen Wellen, wie etwa Licht, insbesondere UV-Licht. Auch Einrichtungen zum Einbringen von Ultraschallwellen können verwendet werden.

Es ist bevorzugt, wenn der getränkte Verstärkungsfaserstrang während des Aushärtens unter Zugspannung gehalten wird. Das Aufbringen der Zugspannung kann durch die Fördereinrichtung erfolgen, die den Verstärkungsfaserstrang aus einem Vorrat entnimmt, beispielsweise von einer Vorratsrolle oder Spule abwickelt und durch die Tränkstation und die Aushärtstation zieht. Es kann vorteilhaft sein, wenn im Vorrat des Verstärkungsfaserstrangs eine Bremseinrichtung vorhanden ist, die der Zugkraft der Fördereinrichtung entgegenwirkt, um den Verstärkungsfaserstrang unter einer definierten Zugspannung zu halten.

Als Verbindungsmaterial kann beispielsweise ein Harz verwendet werden. Es ist vorteilhaft, wenn die Aushärtungseigenschaft des als Verbindungsmaterial verwendeten Harzes sich von der Aushärtungseigenschaft des Harzes der Längsstäbe und Querstäbe unterscheidet. Dadurch kann verhindert werden, dass beim Aushärten des Verbindungsmaterials ein Aufweichen der Matrix der Längs- und Querstäbe erfolgt. Beispielsweise kann das Verbindungsmaterial bei einer niedrigeren Temperatur aushärten als das Harz der Längs- und Querstäbe. Alternativ können auch Harze verwendet werden, die durch unterschiedliche physikalische bzw. chemische Verfahren ausgehärtet werden. Beispielsweise kann das eine Harz durch Wärme aushärten, während das jeweils andere Harz durch Bestrahlung mit Licht, beispielsweise UV-Licht aushärtet. Es ist auch möglich, eines der Harze derart zu wählen, dass es durch Aufbringen eines Aushärtstoffes chemisch aushärtet, während das jeweils andere Harz durch Wärme und/oder Bestrahlung aushärtet. Diese verschiedenen Aushärtprinzipien können beliebig kombiniert werden. Vorzugsweise unterscheiden sich die Aushärtungseffekte der verwendeten Harze ausreichend entweder hinsichtlich des physikalischen und/oder chemischen Prinzips und/oder weist keine sich überlappenden Arbeitsbereiche (Temperatur und/oder Lichtwellenlänge, usw.) beim Aushärten auf.

Es ist bevorzugt, wenn der Verstärkungsfaserstrang und das ausgehärtete faserverstärkte Strangmaterial durch eine gemeinsame Fördereinrichtung als Endlosmaterial bis zur Trenneinrichtung gefördert werden. Dadurch lässt sich eine einfache Vorrichtung zur Herstellung erreichen. Insbesondere kann die Fördereinrichtung nach einer optionalen Aushärtstation und vor der Trennstation angeordnet sein und dort eine entsprechende Zugkraft auf das faserverstärkte Strangmaterial auszuüben. Die Fördereinrichtung kann auch eine Schubkraft auf das ausgehärtete faserverstärkte Strangmaterial ausüben, um es zur Trennstation zu fördern.

Es ist vorteilhaft, wenn mittels der Abgabeeinrichtung an jeweils einem Querstab an allen seinen Kreuzungsstellen jeweils eine definierte Menge des Verbindungsmaterials aufgebracht und der Querstab anschließend auf die Längsstäbe gelegt wird. Das Aufbringen des Verbindungsmaterials an den Kreuzungsstellen des Querstabes kann gleichzeitig erfolgen.

Bei einem anderen Ausführungsbeispiel kann die Abgabeeinrichtung an allen Kreuzungsstellen, vorzugsweise nacheinander, jeweils eine definierte Menge des Verbindungsmaterials auf die Längsstäbe aufbringen, wobei die Querstäbe anschließend auf die Längsstäbe gelegt werden.

Das Verbindungsmaterial hat vorzugsweise eine Viskosität, so dass es als zusammenhängender Verbindungsmaterialklecks bzw. Verbindungsmaterialtropfen an der Kreuzungsstelle haftet ohne wegzufließen.

Das Aufbringen des Verbindungsmaterials an einer Kreuzungsstelle erfolgt mittels einer Form, die zwei oder mehr Formteile aufweist. Die Formteile umschließen eine jeweilige Kreuzungsstelle und vorzugsweise genau eine Kreuzungsstelle, so dass in die geschlossene Form, aus der der jeweilige Längsstab und der jeweilige Querstab herausragen, gezielt an der Kreuzungsstelle das Verbindungsmaterial eingebracht und ausgehärtet werden kann.

Bei einer weiteren bevorzugten Ausführungsform werden Steckverbindungsteile verwendet, um jeweils einen Längsstab und jeweils einen Querstab an einer Kreuzungsstelle sozusagen vorläufig zu verbinden. Das Steckverbindungsteil wird auf die Stäbe an der Kreuzungsstelle aufgesteckt bzw. aufgeklipst und dort insbesondere kraftschlüssig und/oder formschlüssig gehalten. Beispielsweise kann es jeweils zwei elastisch vorgespannte Schenkel aufweisen, die sich beim Aufstecken elastisch voneinander wegbewegen und nach dem Aufstecken den jeweils zugeordneten Längsstab oder Querstab kraftschlüssig und/oder formschlüssig zumindest teilweise umgreifen. Das Steckverbindungsteil kann demnach jeweils zwei Paare solcher Schenkel für jeweils einen der Stäbe an der Kreuzungsstelle aufweisen.

Nach dem Herstellen der Verbindung der Längsstäbe und der Querstäbe mittels der Steckverbindungsteile kann optional ein Verbindungsmaterial auf Abschnitte jedes Längsstabes und jedes Querstabes aufgebracht werden, der mit dem Steckverbindungsteil in Kontakt ist. Insbesondere wird hierfür ein Verbindungsmittel mit niedriger Viskosität verwendet, das sehr einfach in verbleibende sehr kleine Spalte zwischen der Oberfläche des jeweiligen Stabes und dem Steckverbindungsteil fließen kann. Dieses aufgebrachte Verbindungsmaterial kann anschließend ausgehärtet werden.

Eine alternative Möglichkeit besteht darin, dass die Abgabeeinrichtung dazu ausgebildet ist, Energie abzugeben und an der Kreuzungsstelle einzutragen. Dabei kann ein Anteil des Kunststoffmaterials des Steckverbindungsteils fließfähig gemacht und anschließend wieder ausgehärtet werden. Dadurch verbindet sich das Kunststoffmaterial des Steckverbindungsteils mit dem jeweiligen Längsstab bzw. Querstab. Die Abgabeeinrichtung kann beispielsweise zum Einbringen von Wärme oder Ultraschallwellen eingerichtet sein. Die Erwärmung kann durch Induktion erfolgen, wenn die Stäbe und/oder das Steckverbindungsteil elektrisch leitfähiges Material im enthalten. Die Art und der Betrag der abgegebenen Energie ist an den Kunststoff des Steckverbindungsteils derart angepasst, dass vorzugsweise nur der Kunststoff des Steckverbindungsteils flüssig bzw. fließfähig gemacht wird, während das Harz der Stäbe fest bleibt. Es ist auch möglich, sowohl den Kunststoff des Steckverbindungsteils das Harz der Stäbe flüssig bzw. fließfähig zu machen. Dabei stellt ein Teil des Kunststoffes des Steckverbindungsteils das zur Verbindung verwendete Verbindungsmaterial dar. Auch hier ist es vorteilhaft, wenn das Verbindungsmaterial und das Harz der Stäbe unterschiedliche Eigenschaften im Hinblick auf ihre Aushärtung bzw. Aufweichung aufweisen, so dass durch das Einbringen von Energie das Harz der Stäbe nicht geschädigt wird, sondern lediglich das Kunststoffmaterial des Steckverbindungsteils.

Vorteilhafte Ausgestaltungen der Erfindung ergeben sich aus den abhängigen Patentansprüchen, der Beschreibung und den Zeichnungen. Nachfolgend werden bevorzugte Ausführungsbeispiele der Erfindung anhand der Zeichnungen im Einzelnen erläutert. Es zeigen:
Figur 1 eine schematische, blockschaltbildähnliche Darstellung einer Vorrichtung sowie eines Verfahrens zur Herstellung von Stäben,
Figur 2 eine geschnittene Teildarstellung durch einen Stab in perspektivischer Ansicht,
Figur 3 eine schematische, blockschaltbildähnliche Darstellung einer Einrichtung zum Ablegen von Stäben auf einer Ablagefläche,
Figur 4 die auf der Ablagefläche abgelegten Stäbe gemäß Figur 3 in einer schematischen Draufsicht,
Figur 5 eine schematische Darstellung einer nicht erfindungsgemäßen Abgabeeinrichtung zum Ausgeben eines Verbindungsmaterials auf einen Stab,
Figur 6 eine schematische Darstellung des Ablegens eines Querstabes auf Längsstäbe, die auf der Ablagefläche abgelegt sind,
Figur 7 eine schematische Darstellung einer nicht erfindungsgemäßen Abgabeeinrichtung zum Aufbringen von Verbindungsmaterial auf Längsstäbe, die auf einer Ablagefläche abgelegt sind,
Figur 8 eine schematische Darstellung des Ablegens eines Querstabes auf die Längsstäbe,
Figur 9 eine schematische perspektivische Darstellung eines Ausführungsbeispiels der erfindungsgemäßen Abgabeeinrichtung aus einer Form mit zwei Formteilen zum Ausgeben von Verbindungsmaterial an einer Kreuzungsstelle,
Figur 10 eine Kreuzungsstelle zwischen einem Längsstab und einem Querstab, wobei die Stäbe an der Kreuzungsstelle mittels eines Steckverbindungsteils miteinander verbunden sind,
Figur 11 ein Ausführungsbeispiel einer nicht erfindungsgemäßen Abgabeeinrichtung zum Ausgeben von Verbindungsmaterial zwischen Abschnitten der Stäbe und dem Steckverbindungsteil aus Figur 10,
Figur 12 eine nicht erfindungsgemäße Abgabeeinrichtung, bei der als Verbindungsmaterial ein Kunststoff des Steckverbindungsteils verwendet wird, der durch Eintragen von Energie fließfähig wird,
Figur 13 eine schematische Draufsicht auf ein hergestelltes Bewehrungsgitter aus Längsstäben und Querstäben,
Figur 14 eine schematische Prinzipdarstellung einer Aushärteinrichtung zum Aushärten des Verbindungsmaterials,
Figuren 15-18 jeweils eine schematische Darstellung eines Bauelements mit einer Zementmatrix, in die wenigstens ein Bewehrungsgitter eingebunden ist.

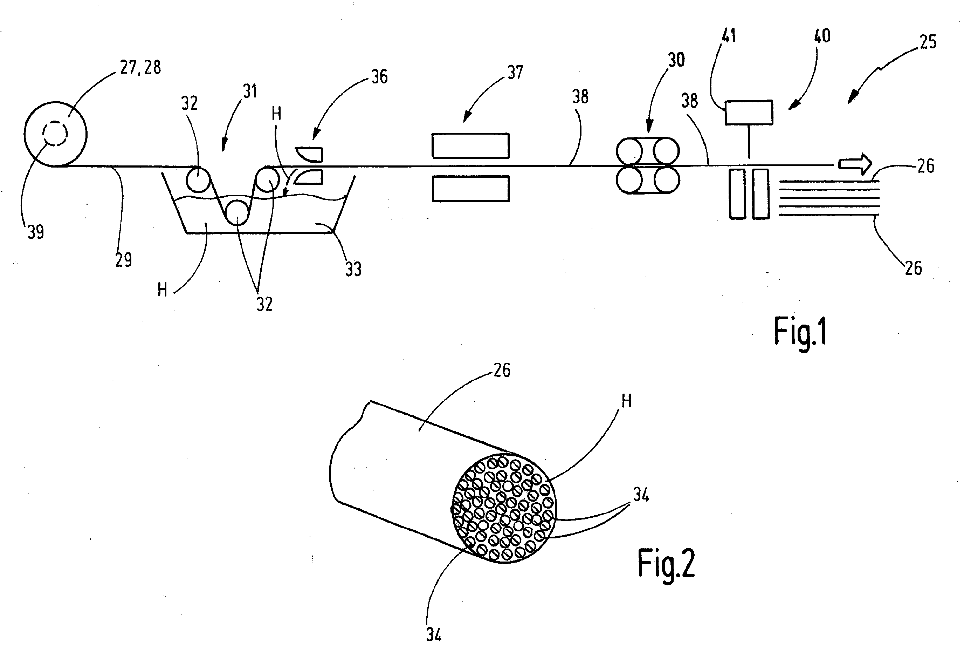

Figur 1 veranschaulicht ein Ausführungsbeispiel einer Vorrichtung 25, die zur Herstellung von Stäben 26 aus faserverstärktem Kunststoff eingerichtet ist. Die Vorrichtung 25 weist eine Bevorratungseinrichtung 27, beispielsweise wenigstens eine Spule 28, zur Bevorratung eines Verstärkungsfaserstrangs 29 auf. Der Verstärkungsfaserstrang 29 wird vorzugsweise von der Spule 28 abgewickelt und den weiteren Bearbeitungsstationen zugeführt. Dazu ist beim Ausführungsbeispiel nach Figur 1 eine Fördereinrichtung 30 vorhanden. Die Fördereinrichtung 30 kann eine oder mehrere Rollen oder Walzen und/oder wenigstens ein Förderband aufweisen, um zum Abziehen des Verstärkungsfaserstrangs 29 eine entsprechende Zugkraft auf den Verstärkungsfaserstrang 29 auszuüben.

Der Verstärkungsfaserstrang 29 wird einer Tränkstation 31 zugeführt. Die Tränkstation 31 kann mehrere Umlenkrollen oder Umlenkwalzen 32 aufweisen, um den Verstärkungsfaserstrang durch ein Bad 33 aus flüssigem Harz H geführt und dadurch mit dem Harz H getränkt. Das Harz H haftet an der Außenfläche von Filamenten 34 an, die den Verstärkungsfaserstrang 29 bilden (Figur 2).

Anschließend wird der getränkte Verstärkungsfaserstrang 29 einer Abstreifstation 36 zugeführt. Die Abstreifstation 36 ist dazu eingerichtet, überschüssiges Harz H von dem getränkten Verstärkungsfaserstrang 29 abzustreifen. Sie ist beispielsgemäß vertikal oberhalb des Bades 33 angeordnet, so dass das abgestreifte Harz H in das Bad 33 zurückgeführt wird, was in Figur 1 stark schematisiert durch den gestrichelten Pfeil veranschaulicht ist.

Nach der Abstreifstation 36 wird das Harz H bei einer Ausführungsform in einer Aushärtstation 37 ausgehärtet. Abhängig von dem verwendeten Harz H erfolgt das Aushärten durch einen physikalischen und/oder chemischen Vorgang. Dies hängt von der Aushärtungseigenschaft des Harzes H ab. Beispielsweise kann in der Aushärtstation 37 Wärme und/oder UV-Licht auf das Harz H einwirken. Der Energieeintrag kann z.B. auch durch Induktion erfolgen, wenn das Harz H und/oder der Verstärkungsfaserstrang 29 elektrisch leitfähiges Material enthält. Alternativ oder zusätzlich können auch chemische Mittel zum Aushärten des Harzes H in der Aushärtstation 37 auf den getränkten Verstärkungsfaserstrang 29 aufgebracht werden.

Durch das Aushärten des Harzes H entsteht ein ausgehärtetes, faserverstärktes Strangmaterial 38. Es ist auch möglich, den harzgetränkten Verstärkungsfaserstrang 29 ohne Aushärten des Harzes H als nicht ausgehärtetes, faserverstärktes Strangmaterial 38 weiterzuverarbeiten. In diesem Fall kann die Aushärtstation 37 entfallen oder der Verstärkungsfaserstrang 29 kann durch die nicht betriebene Aushärtstation 37 oder an der Aushärtstation 37 gefördert werden.

Beispielsgemäß wird auf das ausgehärtete oder nicht ausgehärtete faserverstärkte Strangmaterial 38 durch die Fördereinrichtung 30 eine Zugkraft ausgeübt, die somit auch auf den Verstärkungsfaserstrang 29 bis zur Bevorratungseinrichtung 27 bzw. Spule 28 wirkt. Dadurch wird ein Abziehen bzw. Fördern des Verstärkungsfaserstrangs 29 sowie des Strangmaterials 38 erreicht. Optional kann der Spule 28 bzw. der Bevorratungseinrichtung 27 eine Bremseinrichtung 39 zugeordnet sein. Dadurch kann eine Zugkraft, die auf den Verstärkungsfaserstrang 29 wirkt, definiert eingestellt werden, so dass der Verstärkungsfaserstrang während des optionalen Aushärtens 37 unter Zugspannung gehalten wird. Optional kann die Bremseinrichtung 39 auch als separate Einrichtung vor der Aushärtstation 37 angeordnet sein und beispielsweise gebremste Rollen, Walzen, Förderbänder oder dergleichen aufweisen, die der Abzugskraft der Fördereinrichtung 30 entgegenwirken und eine Zugspannung des getränkten Verstärkungsfaserstrangs 29 in der Aushärtstation 37 aufrechterhalten. Die Zugkraft kann gesteuert oder geregelt werden.

Das Strangmaterial 38 kann in seiner Erstreckungsrichtung auch Schubkräfte zum Weitertransport aufnehmen. Deshalb kann es durch die Fördereinrichtung 30 hindurch weiter zu einer Trennstation 40 mit einer Trenneinrichtung 41 bewegt werden. Die Trenneinrichtung 41 trennt das als Endlosmaterial geförderte Strangmaterial ab, wodurch die Stäbe 26 gebildet werden. Bei dem hier beschriebenen Ausführungsbeispiel haben die Stäbe 26 einen kreisrunden Querschnitt (Figur 2). Alternativ hierzu können auch andere Querschnittsformen gebildet werden, z.B. polygonale oder elliptische Querschnitte oder andere beliebige abschnittsweise gekrümmte und/oder eckige Querschnittsformen. Eine solche Formgebung kann beispielsweise in der Aushärtstation 37 durch entsprechende formgebende Mittel erreicht werden. Beispielsweise kann der getränkte Verstärkungsfaserstrang 29 durch entsprechend geformte Querschnittskanäle in der Aushärtstation 37 gefördert werden.

Die hergestellten Stäbe 26 werden anschließend verwendet, um ein Bewehrungsgitter 45 aus mehreren Längsstäben 46 und mehreren Querstäben 47 zu bilden.

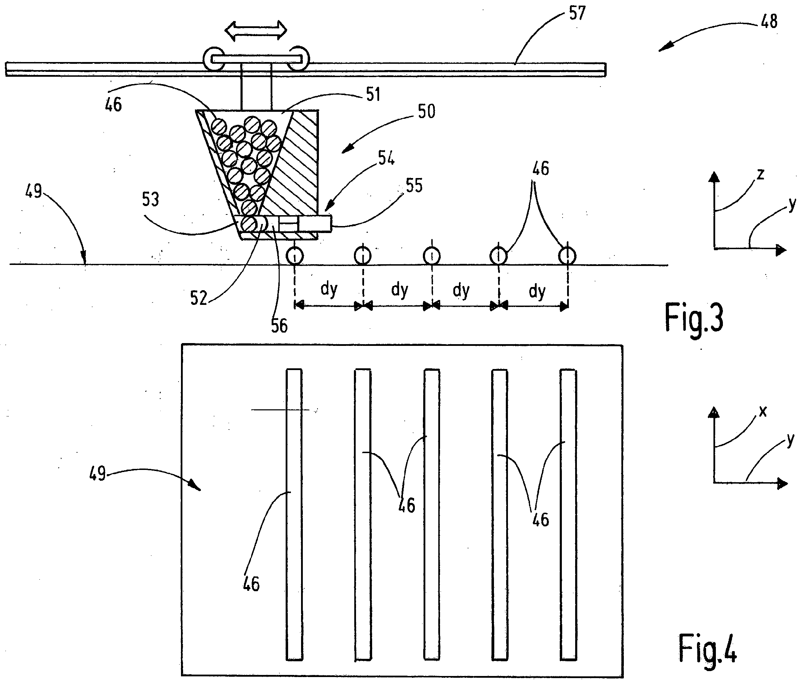

Mittels einer Manipulatoreinrichtung 48 werden zunächst die Längsstäbe 46 auf einer Ablagefläche 49 abgelegt. Benachbarte Längsstäbe 46 haben dabei einen Abstand dy voneinander. Die Ablagefläche 49 ist parallel zu einer Ebene ausgerichtet, die durch eine x-Richtung und eine y-Richtung eines kartesischen Koordinatensystems aufgespannt wird. Beispielsgemäß erstrecken sich die Längsstäbe 46 parallel zueinander in x-Richtung. Alternativ hierzu könnten sie auch unter einem spitzen Winkel geneigt zu der x-Richtung ausgerichtet sein. Der Abstand dy zwischen zwei benachbarten Längsstäben 46 kann konstant sein oder variieren (Figuren 3 und 4).

Bei dem in Figur 3 schematisch veranschaulichten Ausführungsbeispiel hat die Manipulatoreinrichtung 48 zum Ablegen der Längsstäbe 46 eine parallel zur y-Richtung verfahrbare Vereinzelungseinheit 50. In einem trichterförmigen Vorratsbehälter 51 sind die Längsstäbe 46 aufeinander abgelegt. In seinem unteren, verjüngten Bereich hat der trichterförmige Vorratsbehälter 51 eine Öffnung, die quer zur Erstreckungsrichtung der Längsstäbe 46 derart dimensioniert ist, dass lediglich einer der Längsstäbe 46 durch die Öffnung hindurch in einen Ausgabeschacht 52 gelangen kann. Der Ausgabeschacht 52 ist nach unten geschlossen und seitlich mit einer schlitzförmigen Öffnung 53 versehen, durch die der im Ausgabeschacht 52 befindliche Längsstab 46 mittels eines Aktuators 54 abgegeben und auf die Ablagefläche 49 abgelegt werden kann. Der Aktuator 54 hat beispielsweise einen durch einen Linearantrieb 55, beispielsweise einen fluidisch betätigbaren Zylinder, betätigbaren Schieber 56, mittels dem der im Ausgabeschacht 52 befindliche Längsstab 46 aus der schlitzförmigen Öffnung 53 herausgeschoben und auf der Ablagefläche 49 abgelegt werden kann.

Die Vereinzelungseinheit 50 kann insgesamt parallel zu der Ablagefläche 49 bewegt werden, beispielsweise entlang einer Schiene 57, was schematisch in Figur 3 zu erkennen ist. Zum Verfahren der Vereinzelungseinheit 50 kann ein entsprechender Antrieb (nicht dargestellt) vorhanden sein.

Durch die Bevorratung mehrerer Längsstäbe 46 kann mittels der Manipulatoreinrichtung 48 aus Figur 3 sehr schnell eine größere Anzahl von Längsstäben 46 auf der Ablagefläche 49 abgelegt werden.

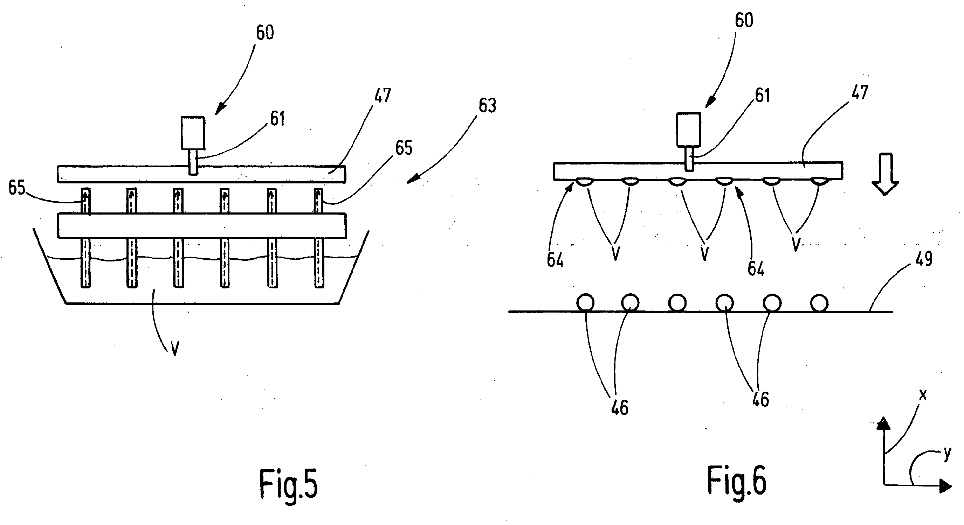

Alternativ zu der in Figur 3 veranschaulichten Ausführungsform kann die Manipulatoreinrichtung 48 auch durch eine Greifereinrichtung 60 mit Greiferfingern 61 gebildet sein, wie es stark schematisiert in den Figuren 5, 6 und 8 veranschaulicht ist. Die Greifereinrichtung 60 kann beispielsweise an einem mehrachsigen Roboterarm oder an einem mehrachsigen Portal oder einer anderen mehrachsigen Positioniereinrichtung angeordnet sein.

Die vorstehend beschriebene Manipulatoreinrichtung 48 kann zusätzlich zum Ablegen der Längsstäbe 46 auf der Ablagefläche 49 auch zum Ablegen der Querstäbe 47 auf den Längsstäben 46 verwendet werden. Beispielsweise kann dieselbe Greifereinrichtung 60 sowohl die Längsstäbe 46, als auch die Querstäbe 47 ergreifen und ablegen. Die in Figur 3 veranschaulichte Manipulatoreinrichtung 48 kann beispielsweise so ausgestaltet sein, dass die Vereinzelungseinheit 50 um eine sich in z-Richtung erstreckende Achse drehbar ist. In dem Vorratsbehälter 51 können dann sowohl Längsstäbe 46, als auch Querstäbe 47 bevorratet werden. Alternativ können zwei derartige Vereinzelungseinheiten 50 vorhanden sein. Die zum Ablegen der Querstäbe 47 eingerichtete Vereinzelungseinheit 50 muss zumindest in x-Richtung entlang der Ablagefläche 49 bewegbar sein. Bei allen Ausführungen und insbesondere dann, wenn eine einzige Vereinzelungseinheit 50 verwendet wird, kann diese sowohl in x-Richtung, als auch in y-Richtung parallel zur Ablagefläche 49 bewegbar ausgeführt sein.

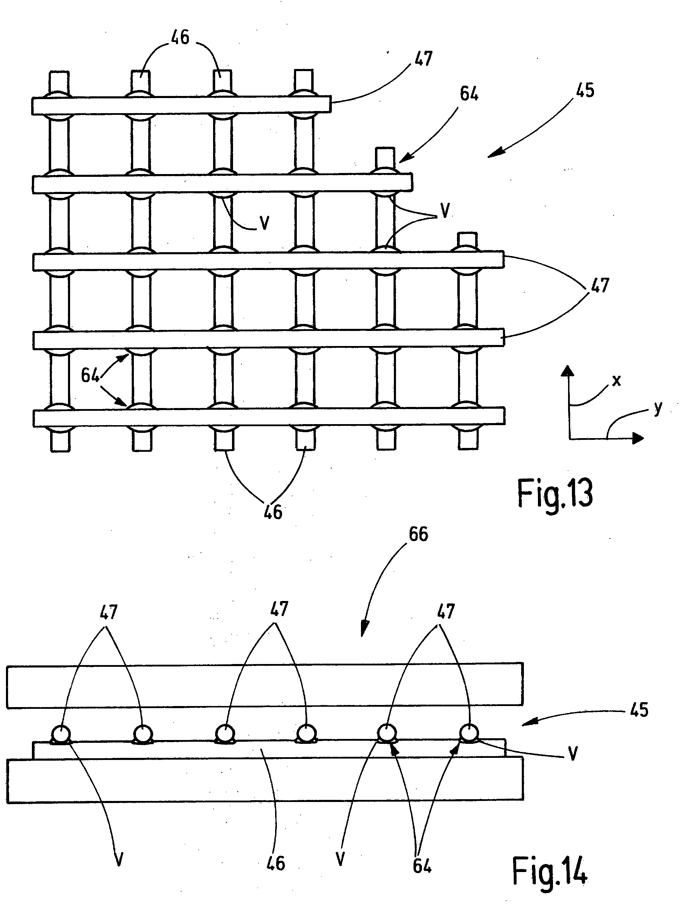

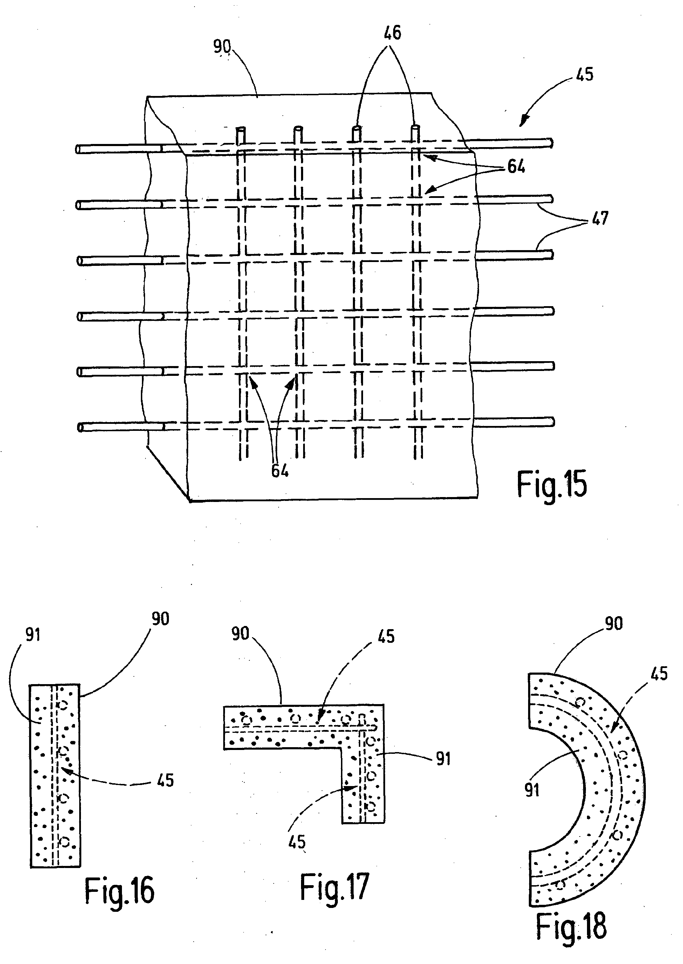

Die Längsstäbe 46 und die Querstäbe 47 sind an Kreuzungsstellen 60 miteinander in Kontakt (Figuren 13 und 15). Auf jede Kreuzungsstelle 60 wird bei einer Ausführungsform mit Hilfe einer Abgabeeinrichtung 61 ein Verbindungsmaterial V in einer jeweils definierten Menge aufgebracht. Das Verbindungsmaterial V kann vor dem Ablegen der Querstäbe 47 auf die Längsstäbe 46 oder anschließend gezielt an jeder Kreuzungsstelle 60 ausgegeben werden. Das Verbindungsmaterial V wird in flüssiger Form auf jeder Kreuzungsstelle 60 ausgegeben und anschließend zum Verbinden der Querstäbe 47 mit den Längsstäben 46 ausgehärtet. Bei dem Verbindungsmaterial V kann es sich beispielsweise um ein Harz handeln. Das als Verbindungsmittel V verwendete Harz kann sich von dem Harz H, das die Kunststoffmatrix der Stäbe 26 bildet, unterscheiden, insbesondere im Hinblick auf das Aushärten und das Erweichen des jeweiligen Harzes. Es ist bevorzugt, wenn sich die beiden Harze hierbei unterscheiden. Beispielsweise können sie durch verschiedene physikalische und/oder chemische Verfahren aufgeweicht und/oder ausgehärtet werden oder sie können durch dasselbe physikalische oder chemische Verfahren aufgeweicht und/oder ausgehärtet werden, wobei sich die Verfahrensbedingungen dann unterscheiden. Dadurch kann gezielt das Verbindungsmaterial V verflüssigt und/oder ausgehärtet werden, ohne den Zustand des Harzes H wesentlich zu verändern, bzw. umgekehrt. Beispielsweise kann beim Aushärten durch Wärmeeintrag die Temperatur des Aushärtens der beiden Harze verschieden sein. Insbesondere ist die Temperatur für das Aushärten des als Verbindungsmaterial V verwendeten Harzes gleich oder geringer als die Temperatur für das Aushärten des als Kunststoffmatrix der Stäbe 26 verwendeten Harzes H.

In den Figuren 5 und 6 ist schematisch eine Möglichkeit zum Aufbringen des Verbindungsmaterials V auf die Querstäbe 47 vor dem Ablegen der Querstäbe 47 auf die Längsstäbe 46 veranschaulicht. Dabei wird aus einem Bad mit flüssigem Verbindungsmaterial V durch mehrere Rohre oder Leitungen 65 flüssiges Verbindungsmaterial V aus dem Bad herausgefördert und jeweils eine definierte Menge auf einen Querstab 47 aufgebracht. Die Rohre oder Leitungen 65 haben einen Abstand zueinander, der dem Abstand der Längsstäbe 46 entspricht, mit dem der betreffende Querstab 47 verbunden werden soll. Die Abstände zwischen den Rohren oder Leitungen 65 kann abhängig von dem Querstab 47, auf dem das Verbindungsmaterial V aufgebracht werden soll, eingestellt werden. Der Querstab 47 wird hierzu mittels einer Manipulatoreinrichtung 48 und beispielsgemäß mittels einer Greifeinrichtung 60 an den offenen Enden der Rohre bzw. Leitungen 65 der Abgabeeinrichtung 63 positioniert und anschließend wird mittels der Abgabeeinrichtung 63 durch die Rohre oder Leitungen 65 das Verbindungsmaterial V in einer jeweils definierten Menge auf eine Kreuzungsstelle 60 am Querstab 47 aufgebracht (Figur 5). Anschließend wird der Querstab 47 mittels der Greifereinrichtung 60 auf den zugeordneten Längsstäben 46 abgelegt (Figur 6). Auf diese Weise kann die Gitterstruktur des Bewehrungsgitters 45 gebildet werden. Anschließend wird das Verbindungsmaterial V unter Verwendung einer Aushärteinrichtung 66 (Figur 14) ausgehärtet. Die Aushärteinrichtung 66 kann analog zu der vorstehend beschriebenen Aushärtstation 37 aus Figur 1 ausgestaltet werden und beispielsweise durch eine Heizeinrichtung gebildet sein. Wie bereits erläutert, ist die Temperatur beim Aushärten des Verbindungsmaterials V dabei vorzugsweise gleich oder geringer als die Temperatur in der Aushärtstation 37 beim Aushärten des Harzes H.

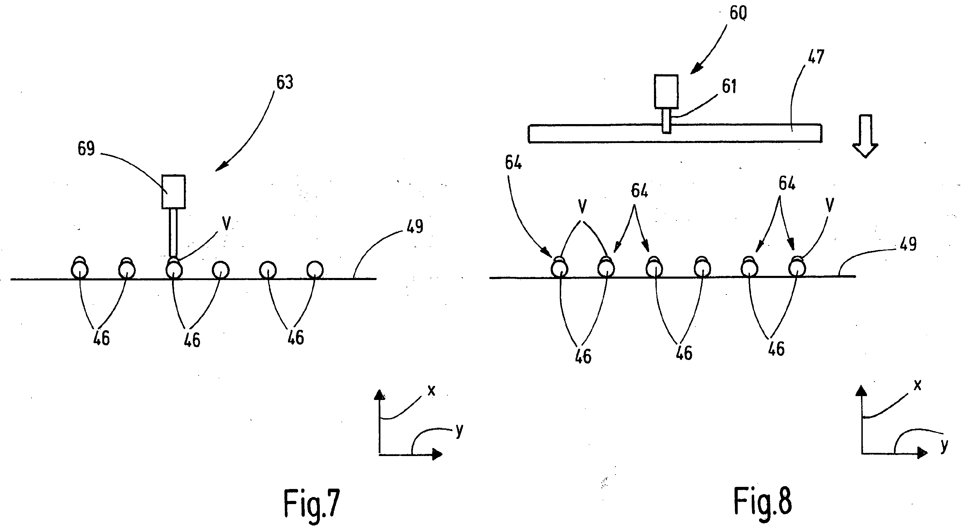

In den Figuren 7 und 8 ist schematisch ein abgewandelter Verfahrensablauf veranschaulicht. Die Abgabeeinrichtung 63 weist dabei eine parallel zur x-y-Ebene und/oder in z-Richtung bewegbare Dosiereinrichtung 69 auf. Die Dosiereinrichtung 69 ist dazu eingerichtet, an jeder Kreuzungsstelle 64 eine definierte Menge des flüssigen Verbindungsmaterials V auszugeben. Das Verbindungsmaterial V wird bevorzugt auf die auf der Ablagefläche 49 abgelegten Längsstäbe 46 aufgebracht. Anschließend werden die Querstäbe 47 mit der Manipulatoreinrichtung 48 und beispielsgemäß der Greifeinrichtung 60 auf die Kreuzungsstellen 64 und auf die Längsstäbe 46 abgelegt. Anschließend wird die Gitterstruktur wie vorstehend beschrieben mittels der Aushärteinrichtung 66 ausgehärtet, um die Längsstäbe 46 und die Querstäbe 47 fest miteinander zu verbinden.

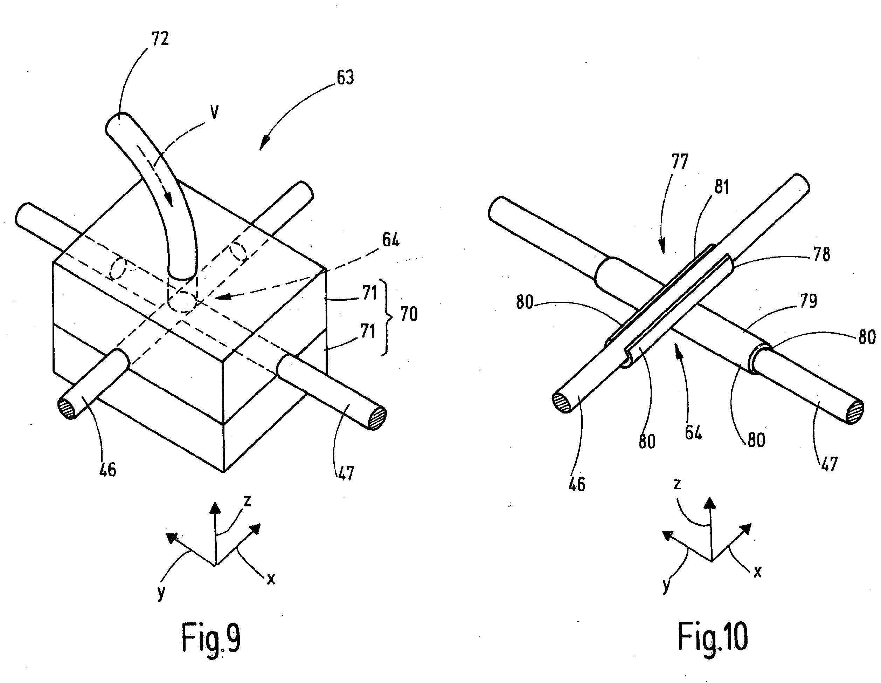

Eine weitere Möglichkeit zum Aufbringen des Verbindungsmaterials V ist schematisch in Figur 9 veranschaulicht. Die Abgabeeinrichtung 63 weist bei dieser Ausführungsform eine Form 70 aus wenigstens zwei Formteilen 71 auf. Die beiden Formteile 71 können um eine Kreuzungsstelle 64, an der sich ein Längsstab 46 und ein Querstab 47 kreuzen, fluiddicht geschlossen werden. Dabei befindet sich jeweils ein Abschnitt eines Längsstabes 46 und eines Querstabes 47 innerhalb der geschlossenen Form 70. Der Formhohlraum um diese Abschnitte der Stäbe 46, 47 ist um ein vorgegebenes Maß größer als der Querschnitt der jeweiligen Stäbe 46, 47. Über eine Zuleitung 72 wird das flüssige Verbindungsmaterial V in die Form 70 eingebracht und umschließt die Abschnitte der Stäbe 46, 47, die sich in der geschlossenen Form 70 befinden. Das Verbindungsmaterial V wird anschließend innerhalb der Form 70 oder alternativ außerhalb der Form 70, wie vorstehend beschrieben, mittels der Aushärteinrichtung 66 ausgehärtet.

Zur Bildung der Gitterstruktur des Bewehrungsgitters 45 kann auf jede Kreuzungsstelle 64 mittels jeweils einer Form 70 das Verbindungsmaterial V aufgebracht werden. Bei dem Verbindungsmaterial V kann es sich um ein Harz oder ein anderes Kunststoffmaterial handeln, mittels dem die Abschnitte der Stäbe 46, 47 an der Kreuzungsstelle 64 umspritzt werden.

Anhand der Figuren 10-12 wird eine weitere Möglichkeit beschrieben, wie ein Längsstab 46 und ein Querstab 47 an einer Kreuzungsstelle 64 miteinander verbunden werden können. Bei diesem Beispiel ist an jeder Kreuzungsstelle ein Steckverbindungsteil 77 vorhanden. Das Steckverbindungsteil 77 besteht aus Kunststoff und ist beispielsgemäß integral ausgebildet. Das Steckverbindungsteil 77 hat einen Längsteil 78, der dem betreffenden Längsstab 46 zugeordnet ist und einen Querteil 79, der dem betreffenden Querstab 47 zugeordnet ist. Beispielsgemäß sind der Längsteil 78 und der Querteil 79 identisch ausgestaltet. Der Längsteil 78 und der Querteil 79 weisen zwei sich gegenüberliegende Klemmschenkel 80 auf. Die Klemmschenkel 80 sind elastisch voneinander weg auslenkbar und begrenzen zwischen ihren freien Enden einen Schlitz 81. Die Breite des Schlitzes 81 zwischen den beiden freien Enden der Klemmschenkel 80 ist kleiner als die Abmessung des jeweiligen Längsstabes 46 bzw. Querstabes 47. Durch den Schlitz 81 kann der Längsstab 46 bzw. der Querstab 47 zwischen die Klemmschenkel 80 bewegt werden. Benachbart zu dem Schlitz 81 begrenzen die Klemmschenkel 80 einen Aufnahmebereich, dessen Querschnitt in etwa dem Querschnitt des jeweiligen Stabes 46 bzw. 47 entspricht. Der Querschnitt des Aufnahmebereichs kann etwas kleiner als die Außenabmessung des jeweiligen Stabes gewählt werden, um eine Klemmwirkung zwischen dem betreffenden Längsteil 78 bzw. Querteil 79 und dem im Aufnahmebereich aufgenommenen Abschnitt des betreffenden Längsstabes 46 bzw. Querstabes 47 zu bewirken.

Bei dem in Figur 10 veranschaulichten Ausführungsbeispiel sind die Stäbe 46, 47 mit einem kreisrunden Querschnitt versehen. Das Längsteil 78 und das Querteil 79 sind jeweils durch eine mit einem vollständig hindurchgehenden Schlitz 81 versehene hohlzylindrische Hülse gebildet.

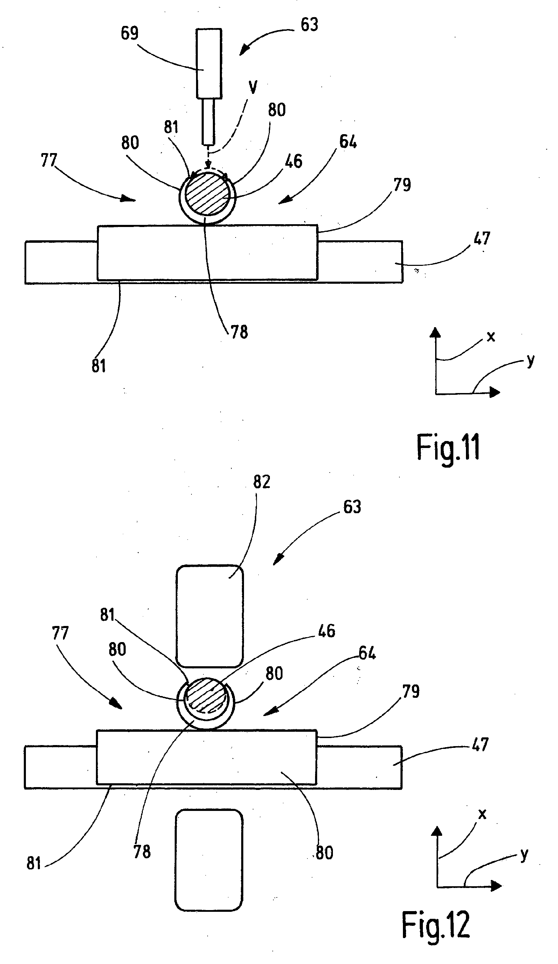

Wie es sich insbesondere aus den Figuren 11 und 12 ergibt, kann die Wandstärke der Klemmschenkel 80 zum Schlitz 81 hin abnehmen.

Die Steckverbindungsteile 77 können beispielsweise zunächst auf die Längsstäbe 46 oder alternativ auf die Querstäbe 47 an den betreffenden Kreuzungsstellen 64 aufgesteckt werden. Anschließend werden die jeweils anderen Stäbe 47 bzw. 46 an den Kreuzungsstellen 64 ebenfalls mit den Steckverbindungsteilen 77 verbunden. Dadurch entsteht an jeder Kreuzungsstelle 64 eine kraftschlüssige und/oder formschlüssige Verbindung zwischen einem Längsstab 46 und einem Querstab 47.

Anhand der Figuren 11 und 12 sind nunmehr zwei mögliche Varianten des weiteren Verfahrensablaufs veranschaulicht. Bei dem in Figur 11 gezeigten Ausführungsbeispiel wird durch die Abgabeeinrichtung 63 mit der Dosiereinrichtung 69 ein flüssiges Verbindungsmittel V mit niedriger Viskosität auf die Abschnitte des Längsstabs 46 und des Querstabs 47 aufgebracht, die sich durch das Längsteil 78 oder das Querteil 79 hindurch erstrecken. Das Verbindungsmittel V fließt dabei in verbleibenden Spalte und Zwischenräume, die zwischen den beiden Klemmschenkeln 80 und der Außenfläche des jeweiligen Stabes 46, 47 verbleiben. Solche Zwischenräume können auch durch definierte Unebenheiten auf der Innenseite der Klemmschenkel 80 gebildet sein. Anschließend kann das aufgebrachte Verbindungsmittel V wie bei den vorstehend beschriebenen Ausführungsbeispielen ausgehärtet werden, beispielsweise mittels der Aushärteinrichtung 66.

Eine weitere Möglichkeit ist schematisch in Figur 12 dargestellt. Dort wird der Kunststoff des Steckverbindungsteils 77 zumindest teilweise aufgeweicht bzw. verflüssigt. Hierfür kann die Abgabeeinrichtung 63 eine Energieeintragseinrichtung 82 aufweisen. Die Energieeintragseinrichtung 82 kann beispielsweise Ultraschallwellen an der Kreuzungsstelle 64 in das Steckverbindungsteil 77 eintragen und ein Verschweißen zwischen dem Steckverbindungsteil 77 und den betreffenden Abschnitten der Stäbe 46, 47 an der Kreuzungsstelle 64 führen. Die Energieeintragseinrichtung 82 kann dementsprechend als Ultraschweißeinrichtung ausgebildet sein. Das Verbindungsmaterial V wird hierbei sozusagen aus dem Kunststoff des Steckverbindungsteils 77 gewonnen bzw. herausgelöst. Somit dient ein Teil des Kunststoffmaterials des Steckverbindungsteils 77 als Verbindungsmaterial V.

Bei einer weiteren Verfahrensvariante kann zusätzliches Verbindungsmaterial V vollständig entfallen. Dabei ist zumindest einer der Stäbe 46, 47, die an einer Kreuzungsstelle 64 aneinander anliegen, nicht ausgehärtet. Anschließend wird das Bewehrungsgitter 45 insgesamt in der Aushärteinrichtung 66 ausgehärtet. Der wesentliche Unterschied besteht bei diesem Verfahren darin, dass zusätzliches Verbindungsmaterial V entfällt. Ansonsten wird analog zu der Darstellung gemäß der Figuren 13 und 14 vorgegangen. Dabei ist es möglich, dass einige der Längsstäbe 46 oder Querstäbe 47 bereits ausgehärtet sind und in der Aushärteinrichtung 66 sozusagen nochmals ausgehärtet werden, beispielsweise nochmals erhitzt werden. Es hat sich aber gezeigt, dass dadurch keine nachteiligen Einwirkungen bei den bereits ausgehärteten Stäben 46 oder 47 auftreten. Die Aushärteinrichtung 66 kann ansonsten wie vorstehend beschrieben ausgeführt sein.

Bei einer weiteren Variante des Verfahrens kann das verwendete Verbindungsmaterial V identisch sein mit dem Harz H der Stäbe 46, 47. Auch das nochmalige Aushärten bereits ausgehärteter Stäbe 46, 47 zur Aushärtung des Verbindungsmaterials V hat keine nachteiligen Auswirkungen.

Bei allen Verfahren ist bei der Verwendung der Aushärteinrichtung 66 darauf zu achten, dass keine schädigende Einwirkung auf bereits ausgehärtetes Harz stattfindet, beispielsweise durch thermische Zersetzung wegen zu großer Temperaturen. Beim thermischen Aushärten wird dabei in der Aushärteinrichtung 66 entweder eine niedrigere oder dieselbe Aushärtungstemperatur verwendet, wie für das Aushärten des Harzes H der Stäbe 46, 47.

Bei sämtlichen Verfahren verbleibt zwischen den Kreuzungsstellen 64 jeweils ein Abschnitt am Längsstab 46 und am Querstab 47, der frei ist von Verbindungsmaterial V. Das Verbindungsmaterial V wird gezielt an den jeweiligen Kreuzungsstellen 64 aufgebracht. Dadurch bleiben die Eigenschaften der Stäbe 46, 47 erhalten. Beispielsweise werden die Biegeeigenschaften der Stäbe 46, 47 des Bewehrungsgitters 45 nicht durch das ausgehärtete Verbindungsmittel V beeinträchtigt.

Neben dem Einsparen an der Menge des Verbindungsmaterials V entsteht insbesondere auch kein Abfallmaterial an den Stäben 26. Die Trenneinrichtung 41 in der Trennstation 40 kann derart gesteuert werden, dass zur Herstellung eines Bewehrungsgitters 45 mit einer gewünschten Kontur lediglich Stäbe 26 mit der erforderlichen Länge hergestellt und dann zur Bildung des Bewehrungsgitters 45 verwendet werden. Wie es beispielhaft in Figur 13 veranschaulicht ist, können sowohl die Längsstäbe 46, als auch die Querstäbe 47 an unterschiedlichen Stellen des Bewehrungsgitters 45 unterschiedlich lang sein. Es ist aber nicht notwendig, ein hergestelltes Bewehrungsgitter 45 unter Bildung von Abfallmaterial zurechtzuschneiden, sondern es werden bereits Stäbe 26 in der exakt erforderlichen Länge als Längsstäbe 46 und/oder Querstäbe 47 verwendet. Eine Steuereinrichtung der Vorrichtung 25 kann die Anzahl und jeweilige Länge der erforderlichen Stäbe 26 vorgegeben werden, die dann entsprechend in der Trennstation 40 durch Ablängen des Strangmaterials 38 hergestellt werden.

Die gesamte Vorrichtung 25, 63 arbeitet daher sehr effizient.

Das Bewehrungsgitter 45 kann zur Herstellung eines Bauteils 90, beispielsweise eines Betonbauteils verwendet werden. Hierfür wird das Bewehrungsgitter 45 in eine Matrix, insbesondere Zementmatrix 91 des Bauteils 90 eingebunden. Vor dem Einbinden in die Zementmatrix 91 ist es auch möglich, mehrere Bewehrungsgitter mittels des Verbindungsmaterials V miteinander zu verbinden (Figur 17). Es können auch beliebige dreidimensionale Bewehrungselemente oder Bewehrungskörper aus einzelnen Bewehrungsgittern 45 oder aus einem Bewehrungsgitter 45 mit daran verbundenen weiteren Stäben 46, 47 zum Einbinden in die Zementmatrix 91 aufgebaut werden. Ein solcher dreidimensionaler Bewehrungskörper kann aus Stäben 46, 47 bestehen, die sich parallel zu einer Ebene erstrecken und wenigstens einem Stab, der sich schräg oder rechtwinkelig zu dieser Ebene erstreckt. Diese Stäbe können wie vorstehend erläutert an den Kreuzungsstellen miteinander verbunden werden.

Die Erfindung betrifft ein Verfahren sowie eine Vorrichtung 25, 48, 63 zur Herstellung eines Bewehrungsgitters 45. Dabei wird zunächst ein Verstärkungsfaserstrang 29 mit einem Harz H getränkt und zu einem ausgehärteten, faserverstärkten Strangmaterial 38 ausgehärtet. Anschließend wird das als Endlosmaterial vorliegende Strangmaterial 38 zu Stäben 26 abgelängt, die dann als Längsstäbe 46 oder Querstäbe 47 zur Bildung des Bewehrungsgitters 45 verwendet werden. An jeder Kreuzungsstelle 64 zwischen einem Längsstab 46 und einem Querstab 47 wird ein Verbindungsmaterial verwendet, das flüssig auf die Kreuzungsstelle 64 ausgegeben oder an der Kreuzungsstelle 64 verflüssigt und anschließend ausgehärtet wird. Dadurch entsteht eine feste Verbindung zwischen den Längsstäben 46 und den Querstäben 47 an den Kreuzungsstellen. Zwischen den Kreuzungsstellen 64 haben die Längsstäbe 46 und die Querstäbe 47 Abschnitte, die frei sind von Verbindungsmaterial V.

### Bezugszeichenliste:

- 25: Vorrichtung
- 26: Stab
- 27: Bevorratungseinrichtung
- 28: Spule
- 29: Verstärkungsfaserstrang
- 30: Fördereinrichtung
- 31: Tränkstation
- 32: Umlenkrolle
- 33: Bad
- 36: Abstreifstation
- 37: Aushärtstation
- 38: Strangmaterial
- 39: Bremseinrichtung
- 40: Trennstation
- 41: Trenneinrichtung
- 45: Bewehrungsgitter
- 46: Längsstab
- 47: Querstab
- 48: Manipulatoreinrichtung
- 49: Ablagefläche
- 50: Vereinzelungseinheit
- 51: Vorratsbehälter
- 52: Ausgabeschacht
- 53: schlitzförmige Öffnung
- 54: Aktuator
- 55: Linearantrieb
- 56: Schieber
- 57: Schiene
- 60: Greifeinrichtung
- 61: Greiferfinger
- 63: Abgabeeinrichtung
- 64: Kreuzungsstelle
- 65: Rohr oder Leitung
- 69: Dosiereinrichtung
- 70: Form
- 71: Formteil
- 72: Zuleitung
- 77: Steckverbindungsteil
- 78: Längsteil
- 79: Querteil
- 80: Klemmschenkel
- 81: Schlitz
- 90: Bauteil
- 91: Zementmatrix
- H: Harz
- V: Verbindungsmaterial
- x: Raumrichtung
- y: Raumrichtung
- z: Raumrichtung

## Patentansprüche

1. Verfahren zur Herstellung eines Bewehrungsgitters (45) mit folgenden Schritten:
- Zuführen eines Verstärkungsfaserstrangs (29) zu einer Tränkstation (31) mittels einer Fördereinrichtung (30),
- Tränken des Verstärkungsfaserstrangs (29) mit einem Harz (H),
- Abstreifen einer überschüssigen Harzmenge des Harzes (H) von dem getränkten Verstärkungsfaserstrang (29) in einer Abstreifstation (36),
- Aushärten des Harzes (H) in einer Aushärtstation (37) zur Bildung eines ausgehärteten faserverstärkten Strangmaterials (38),
- Erzeugen eines Stabes (26) durch Ablängen des faserverstärkten Strangmaterials (38) in einer Trennstation (40),
- Ablegen von mehreren der Stäben (26) nebeneinander als Längsstäbe (46) mittels einer Manipulatoreinrichtung (48),
- Ablegen von mehreren der Stäben (26) als Querstäbe (47) auf die Längsstäbe (46) mittels der Manipulatoreinrichtung (48),
- Verbinden der der Querstäbe (47) und der Längsstäbe (46) an den Kreuzungsstellen (64) durch Aufbringen eines aushärtbaren Verbindungsmaterials (V) ausschließlich an Kreuzungsstellen (64) mittels einer Abgabeeinrichtung, an denen jeweils ein Längsstab (46) und ein Querstab (47) in Kontakt gelangen oder in Kontakt stehen nach oder vor dem Ablegen der Querstäbe (47) auf die Längsstäbe (46) und Aushärten des Verbindungsmaterials (V) zur Verbindung der Querstäbe (47) mit den Längsstäben (46) an den Kreuzungsstellen (64), wenn die Längsstäbe (46) und/oder Querstäbe (47) bereits ausgehärtet sind, wobei die Abgabeeinrichtung (63) eine zwei Formteile (71) aufweisende Form (70) aufweist, wobei die Formteile (71) nach dem Ablegen von wenigstens einem der Querstäbe (47) auf die Längsstäbe (46) jeweils eine der Kreuzungsstellen (64) umschließen und wobei das Verbindungsmaterial (V) in die um die Kreuzungsstelle (64) geschlossene Form (70) gefördert und anschließend ausgehärtet wird.

2. Verfahren nach Anspruch 1,
**dadurch gekennzeichnet, dass** der getränkte Verstärkungsfaserstrang (29) während des Aushärtens unter Zugspannung gehalten wird.

3. Verfahren nach Anspruch 1 oder 2,
**dadurch gekennzeichnet, dass** die Verbindung ohne zusätzliches Verbindungsmaterial beim Aushärten der Harzes (H) eines Längsstabes (46) und/oder eines Querstabes (47) an der Kreuzungsstelle (64) hergestellt wird oder dass als Verbindungsmaterial (V) ein Harz verwendet wird, dessen Aushärtungseigenschaft sich von der des Harzes (H) der Längsstäbe (46) und Querstäbe (47) unterscheidet.

4. Verfahren nach Anspruch 3,
**dadurch gekennzeichnet, dass** das als Verbindungsmaterial (V) verwendete Harz bei einer anderen, vorzugsweise niedrigeren Temperatur aushärtet als das Harz (H) der Längsstäbe (46) und Querstäbe (47).

5. Verfahren nach Anspruch 3,
**dadurch gekennzeichnet, dass** das als Verbindungsmaterial (V) verwendete Harz durch Zufuhr von Wärme oder durch Induktion aushärtet und das Harz (H) der Längsstäbe (46) und Querstäbe (47) durch Bestrahlung mit Licht, vorzugsweise UV-Licht, aushärtet oder umgekehrt.

6. Verfahren nach einem der vorhergehenden Ansprüche, **dadurch gekennzeichnet, dass** der Verstärkungsfaserstrang (29) und das Strangmaterial (38) durch eine Fördereinrichtung (30) als Endlosmaterial bis zur Trennstation (40) gefördert wird.

7. Verfahren nach Anspruch 6,
**dadurch gekennzeichnet, dass** die Fördereinrichtung (30) nach der Aushärtstation (37) angeordnet ist und auf das Strangmaterial (38) eine Zugkraft ausübt.

8. Verfahren nach einem der vorhergehenden Ansprüche, **dadurch gekennzeichnet, dass** eine Trenneinrichtung (41) der Trennstation (40) angesteuert wird, um eine vorgegebene Anzahl von Stäben (26) in jeweils eine vorgegebenen Länge für ein Bewehrungsgitter (45) zu erzeugen.

9. Verfahren nach einem der vorhergehenden Ansprüche, **dadurch gekennzeichnet, dass** ein Bewehrungsgitter (45) mit wenigstens einem weiteren Stab (45, 46) oder einem weiteren Bewehrungsgitter (45) zu einem dreidimensionalen Bewehrungskörper verbunden wird.

10. Vorrichtung zur Herstellung eines Bewehrungsgitters (45),
mit einer Fördereinrichtung (30), die dazu eingerichtet ist, einen Verstärkungsfaserstrang (29) zuzuführen,
mit einer Tränkstation (31), die dazu eingerichtet ist, den zugeführten Verstärkungsfaserstrang (29) mit einem Harz (H) zu tränken,
mit einer Abstreifstation (36), die dazu eingerichtet ist, eine überschüssige Menge des Harzes (H) vom getränkten Verstärkungsfaserstrang (29) abzustreifen,
mit einer Trennstation (40), die dazu eingerichtet ist, das zugeführte faserverstärkte Strangmaterial (38), das aus dem harzgetränkten Verstärkungsfaserstrang (29) gebildet ist und entweder nicht ausgehärtet oder in einer Aushärtstation (37) ausgehärtet ist, in Stäbe (26) zu trennen,
mit einer Manipulatoreinrichtung (48), die dazu eingerichtet ist, mehrere der Stäbe (26) nebeneinander als Längsstäbe (46) abzulegen und mehrere der Stäbe (26) als Querstäbe (47) auf die Längsstäbe (46) abzulegen,
mit einer Aushärteinrichtung (66), die dazu eingerichtet ist, das Harz (H) der Längsstäbe (46) und Querstäbe (47) auszuhärten, wobei das Verbinden der der Querstäbe (47) und der Längsstäbe (46) an den Kreuzungsstellen (64) durch Aufbringen eines aushärtbaren Verbindungsmaterials (V) ausschließlich an Kreuzungsstellen (64) mittels einer Abgabeeinrichtung (63) erfolgt, an denen jeweils ein Längsstab (46) und ein Querstab (47) in Kontakt gelangen oder in Kontakt stehen nach dem Ablegen der Querstäbe (47) auf die Längsstäbe (46) und Aushärten des Verbindungsmaterials (V) zur Verbindung der Querstäbe (47) mit den Längsstäben (46) an den Kreuzungsstellen (64), der ausgehärteten Längsstäbe (46) und Querstäbe (47), wobei die Abgabeeinrichtung (63) eine zwei Formteile (71) aufweisende Form (70) aufweist, wobei die Formteile (71) nach dem Ablegen von wenigstens einem der Querstäbe (47) auf die Längsstäbe (46) jeweils eine der Kreuzungsstellen (64) umschließen und wobei das Verbindungsmaterial (V) in die um die Kreuzungsstelle (64) geschlossene Form (70) gefördert und anschließend ausgehärtet wird.

## Claims

1. A method for producing a reinforcement mesh (45), having the following steps:
- feeding a reinforcement fibre strand (29) to a saturation station (31) by means of a conveying device (30),
- saturating the reinforcement fibre strand (29) with a resin (H),
- stripping an excess resin amount of the resin (H) from the saturated reinforcement fibre strand (29) in a stripping station (36),
- curing the resin (H) in a curing station (37) in order to form a cured fibre-reinforced strand material (38),
- producing a bar (26) by cutting the fibre-reinforced strand material (38) to length in a cutting station (40),
- depositing a plurality of the bars (26) side-by-side as longitudinal bars (46) by means of a manipulator device (48),
- depositing a plurality of the bars (26) as transverse bars (47) on the longitudinal bars (46) by means of the manipulator device (48),
- connecting the transverse bars (47) and the longitudinal bars (46) at the intersection points (64) by:
applying a curable connecting material (V) by means of a dispensing device exclusively to intersection points (64), at each of which a longitudinal bar (46) and a transverse bar (47) come into contact or are in contact after or prior to the transverse bars (47) being deposited on the longitudinal bars (46), and curing the connecting material (V) for connection of the transverse bars (47) to the longitudinal bars (46) at the intersection points (64) when the longitudinal bars (46) and/or transverse bars (47) are already cured, wherein the dispensing device (63) has a mould (70) having two mould parts (71), wherein the mould parts (71) each surround one of the intersection points (64) after deposition of at least one of the transverse bars (47) on the longitudinal bars (46), and wherein the connecting material (V) is conveyed into the mould (70) being closed around the intersection point (64) and is then cured.

2. The method according to claim 1,
**characterised in that** the saturated reinforcement fibre strand (29) is held under tensile stress during the curing.

3. The method according to claim 1 or 2,
**characterised in that** the connection is established at the intersection point (64) without additional connecting material during the curing of the resin (H) of a longitudinal bar (46) and/or a transverse bar (47), or **in that** a resin of which the curing property differs from the resin (H) of the longitudinal bars (46) and transverse bars (47) is used as connecting material (V).

4. The method according to claim 3,
**characterised in that** the resin used as connecting material (V) cures at a different, preferably lower temperature compared to the resin (H) of the longitudinal bars (46) and transverse bars (47).

5. The method according to claim 3,
**characterised in that** the resin used as connecting material (V) cures by supplying heat or by induction and the resin (H) of the longitudinal bars (46) and transverse bars (47) cures by irradiation with light, preferably UV light, or vice versa.

6. The method according to any one of the preceding claims, **characterised in that** the reinforcement fibre strand (29) and the strand material (38) are conveyed as endless material by a conveying device (30) to the cutting station (40) .

7. The method according to claim 6,
**characterised in that** the conveying device (30) is arranged downstream the curing station (37) and exerts a tensile force onto the strand material (38).

8. The method according to any one of the preceding claims, **characterised in that** a cutting device (41) of the cutting station (40) is controlled to produce a specified number of bars (26) each of a specified length for a reinforcement mesh (45).

9. The method according to any one of the preceding claims, **characterised in that** a reinforcement mesh (45) is connected to at least one further bar (45, 46) or to a further reinforcement mesh (45) to form a three-dimensional reinforcement body.

10. An apparatus for producing a reinforcement mesh (45),
comprising a conveying device (30), which is configured to supply a reinforcement fibre strand (29),
comprising a saturation station (31), which is configured to saturate the supplied reinforcement fibre strand (29) with a resin (H),
comprising a stripping station (36), which is configured to strip an excess amount of the resin (H) from the saturated reinforcement fibre strand (29),
comprising a cutting station (40), which is configured to cut the supplied fibre-reinforced strand material (38), which is formed from the resin-saturated reinforcement fibre strand (29) and either is not cured or is cured in a curing station (37), into bars (26),
comprising a manipulator device (48), which is configured to deposit a plurality of the bars (26) side-by-side as longitudinal bars (46) and to deposit a plurality of the bars (26) as transverse bars (47) on the longitudinal bars (46),
comprising a curing device (66), which is configured to cure the resin (H) of the longitudinal bars (46) and transverse bars (47), wherein connection of the transverse bars (47) and the longitudinal bars (46) at the intersection points (64) is carried out by applying a curable connecting material (V) by means of a dispensing device (63) exclusively to intersection points (64), at each of which a longitudinal bar (46) and a transverse bar (47) come into contact or are in contact after the transverse bars (47) being deposited on the longitudinal bars (46), and curing the connecting material (V) for connection of the transverse bars (47) to the longitudinal bars (46) at the intersection points (64) of the cured longitudinal bars (46) and transverse bars (47), wherein the dispensing device (63) has a mould (70) having two mould parts (71), wherein the mould parts (71) each surround one of the intersection points (64) after deposition of at least one of the transverse bars (47) on the longitudinal bars (46), and wherein the connecting material (V) is conveyed into the mould (70) being closed around the intersection point (64) and is then cured.

## Revendications

1. Procédé de fabrication d'une grille d'armature (45), comprenant les étapes suivantes :
- amenée d'un faisceau de fibres de renfort (29) à un poste d'imprégnation (31) à l'aide d'un dispositif transporteur (30),
- imprégnation du faisceau de fibres de renfort (29) avec une résine (H),
- raclage d'une quantité de résine excédentaire de la résine (H) du faisceau de fibres de renfort (29) imprégné, dans un poste de raclage (36),
- durcissement de la résine (H) dans un poste de durcissement (37), en vue de la formation d'un matériau de faisceau renforcé par fibres (38) durci,
- réalisation d'une barre (26) par découpe à longueur du matériau de faisceau renforcé par fibres (38), dans un poste de coupe (40),
- dépôt de plusieurs des barres (26) les unes à côté des autres, en tant que barres longitudinales (46), au moyen d'un dispositif manipulateur (48),
- dépôt de plusieurs des barres (26) les unes à côté des autres, en tant que barres transversales (47), sur les barres longitudinales (46), au moyen du dispositif manipulateur (48),
- assemblage des barres transversales (47) et des barres longitudinales (46) aux points de croisement (64), par application d'un matériau d'assemblage (V) durcissable, à l'aide d'un dispositif de distribution, exclusivement aux points de croisement (64) où une barre longitudinale (46) et une barre transversale (47) entrent respectivement en contact ou sont en contact, après ou avant le dépôt des barres transversales (47) sur les barres longitudinales (46), et durcissement du matériau d'assemblage (V) pour relier les barres transversales (47) aux barres longitudinales (46) aux points de croisement (64), lorsque les barres longitudinales (46) et/ou les barres transversales (47) ont déjà durci, sachant que le dispositif de distribution (63) présente un moule (70) comportant deux parties de moule (71), les parties de moule (71) entourant respectivement un des points de croisement (64) après le dépôt d'au moins une des barres transversales (47) sur les barres longitudinales (46), et le matériau d'assemblage (V) étant transporté dans le moule (70) fermé autour du point de croisement (64) et étant ensuite durci.

2. Procédé selon la revendication 1, **caractérisé en ce que** le faisceau de fibres de renfort (29) imprégné est maintenu sous contrainte de traction pendant le durcissement.

3. Procédé selon la revendication 1 ou 2, **caractérisé en ce que** l'assemblage est réalisé sans matériau d'assemblage supplémentaire lors du durcissement de la résine (H) d'une barre longitudinale (46) et/ou d'une barre transversale (47) au point de croisement (64), ou **en ce que** l'on utilise en tant que matériau d'assemblage (V) une résine dont la propriété de durcissement se distingue de celle de la résine (H) des barres longitudinales (46) et des barres transversales (47).

4. Procédé selon la revendication 3, **caractérisé en ce que** la résine utilisée comme matériau d'assemblage (V) durcit à une température qui est différente, de préférence plus faible, que celle de la résine (H) des barres longitudinales (46) et des barres transversales (47).

5. Procédé selon la revendication 3, **caractérisé en ce que** la résine utilisée comme matériau d'assemblage (V) durcit par apport de chaleur ou par induction, et la résine (H) des barres longitudinales (46) et des barres transversales (47) durcit par irradiation avec de la lumière, de préférence de la lumière UV, ou inversement.

6. Procédé selon l'une des revendications précédentes, **caractérisé en ce que** le faisceau de fibres de renfort (29) et le matériau de faisceau (38) est transporté sous forme de matériau sans fin par un dispositif transporteur (30) jusqu'au poste de coupe (40).

7. Procédé selon la revendication 6, **caractérisé en ce que** le dispositif transporteur (30) est placé après le poste de durcissement (37) et exerce une force de traction sur le matériau de faisceau (38).

8. Procédé selon l'une des revendications précédentes, **caractérisé en ce qu'**un dispositif de coupe (41) du poste de coupe (40) est activé pour réaliser un nombre prédéfini de barres (26), respectivement avec une longueur prédéterminée, pour une grille d'armature (45).

9. Procédé selon l'une des revendications précédentes, **caractérisé en ce qu'**une grille d'armature (45) est reliée à au moins une autre barre (45, 46) ou une autre grille d'armature (45) pour former un corps d'armature tridimensionnel.

10. Dispositif de fabrication d'une grille d'armature (45),
comprenant un dispositif transporteur (30) qui est conçu pour amener un faisceau de fibres de renfort (29),
comprenant un poste d'imprégnation (31) qui est conçu pour imprégner d'une résine (H) le faisceau de fibres de renfort (29) amené,
comprenant un poste de raclage (36) qui est conçu pour racler une quantité excédentaire de la résine (H) du faisceau de fibres de renfort (29) imprégné,
comprenant un poste de coupe (40) qui est conçu pour découper en barres (26) le matériau de faisceau renforcé par fibres (38) amené qui est constitué du faisceau de fibres de renfort (29) imprégné de résine et soit n'est pas durci soit est durci dans un poste de durcissement (37),
comprenant un dispositif manipulateur (48) qui est conçu pour déposer plusieurs des barres (26) les unes à côté des autres, en tant que barres longitudinales (46), et pour déposer plusieurs des barres (26) sur les barres longitudinales (46), en tant que barres transversales (47),
comprenant un dispositif de durcissement (66) qui est conçu pour durcir la résine (H) des barres longitudinales (46) et des barres transversales (47), l'assemblage des barres transversales (47) et des barres longitudinales (46) aux points de croisement (64) étant réalisé par application d'un matériau d'assemblage (V) durcissable, à l'aide d'un dispositif de distribution (63), exclusivement aux points de croisement (64) où une barre longitudinale (46) et une barre transversale (47) entrent respectivement en contact ou sont en contact, après le dépôt des barres transversales (47) sur les barres longitudinales (46), et durcissement du matériau d'assemblage (V) pour relier les barres transversales (47) aux barres longitudinales (46) aux points de croisement (64), des barres longitudinales (46) et des barres transversales (47) durcies, sachant que le dispositif de distribution (63) présente un moule (70) comportant deux parties de moule (71), les parties de moule (71) entourant respectivement un des points de croisement (64) après le dépôt d'au moins une des barres transversales (47) sur les barres longitudinales (46), et le matériau d'assemblage (V) étant transporté dans le moule (70) fermé autour du point de croisement (64) et étant ensuite durci.
